# FASCICULE DE BREVET EUROPEEN

(11) **EP 2 258 824 B1**
(45) Date de publication et mention de la délivrance du brevet: **04.09.2013**
(21) Numéro de dépôt: 10290295.4
(22) Date de dépôt: 03.06.2010
(51) Int. Cl.: C12C 1/02

(54) **Dispositif et procédé de régulation d'un arrosage pour trempage**
Vorrichtung und Verfahren zur Regulierung der Berieselung für die Weiche
Device and method for adjusting sprinkling for steeping

(30) Priorité: 04.06.2009 FR 0902702
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- WO-A2-01/43531
- BE-A- 670 142
- DE-A1- 1 517 765
- DE-C- 34 662
- DE-C- 558 310
- FR-A- 807 324
- GB-A- 1 583 148
- GB-A- 2 258 243
- GB-A- 2 405 075

## Description

L'invention concerne le domaine technique du maltage. Plus particulièrement l'invention se rapporte à un dispositif de trempage.

Lors du maltage il s'agit de reproduire le développement naturel de germination d'une céréale, afin que celle-ci produise certains enzymes, comme par exemple l'amylase. Comme céréale on utilise généralement de l'orge, ou encore du seigle, du blé ou de l'épeautre.

Le maltage comprend le traitement de la céréale par une succession d'opérations (notamment : trempage - germination - touraillage - dégermage), après quoi on obtient du malt. Il existe de gros besoins en malt de différentes propriétés et qualités selon son domaine d'application. Le brassage par exemple fait partie de ces domaines d'application et nécessite un malt adapté et conditionné pour la fabrication de la bière.

Les principes généraux du maltage sont quasi ancestraux. On en trouve une synthèse dans l'ouvrage *"*Malterie et Brasserie", de Jean SUNIER, 2ème édition, imprimerie La Concorde, Lausanne, 1968, ou encore dans sa réédition plus récente sous le nouveau titre *"*La Fabrication de la Bière", Alliage éditeur, 26 septembre 2007, ISBN-13 No. 978-2921327602.

Aujourd'hui, le maltage est industriel, et réalisé dans des installations appelées malteries. L'un des buts d'une malterie est de mettre en place une installation automatisée qui procure un excellent rendement en termes qualitatifs, tout en cherchant à réduire les nombreux coûts d'investissement et de fonctionnement de cette industrie: emprise de terrain, génie civil de construction, besoins en énergie, notamment.

Le document EP 0 546 910 B1 décrit une installation de malterie qui vise notamment des moyens de liaison amovibles pour plateau perforé tout en conservant un nettoyage amélioré de l'installation.

D'autres installations sont connues de WO01/43531, GB 1583148 et DE 558310.

De façon générale, une telle installation comporte au moins les éléments suivants :
- un trempeur pour une opération de trempage,
- au moins un germoir pour une opération de germination,
- au moins une touraille pour une opération de touraillage, et
- un système de transport de l'un à l'autre, dans l'ordre.

Chacun de ces éléments est lié à des conditions opératoires strictes. En effet, les exigences de températures, de temps d'exposition et d'hygiène sont considérables et nécessitent une veille constante des différents éléments d'une malterie afin d'assurer une production de malt optimisée. De plus, les malteries doivent s'efforcer de réunir les conditions et besoins requis par l'industrie alimentaire, notamment pour assurer une bonne production de malt qui répond aux besoins de consommation.

La présente invention vient améliorer la situation.

À cet effet, l'invention vient introduire un dispositif pour trempage de grains comprenant une cuve formée par un fond de cuve et une paroi latérale, une vanne de remplissage de la cuve en liquide, une vanne de vidange de la cuve en liquide, et une grille inférieure à distance du fond, la grille inférieure formant le fond d'une chambre de trempage de grains. Le dispositif comprend un système d'homogénéisation de la durée d'humidification des grains pourvu d'un détecteur de niveau bas de liquide dans la cuve, d'un détecteur de niveau haut de liquide dans la cuve, d'une pompe de prélèvement de liquide sous la grille dans la cuve, d'une commande de pompe active entre le niveau bas et le niveau haut de liquide, et d'un répartiteur de liquide alimenté par la pompe et disposé au dessus de la chambre de trempage de grains.

Le répartiteur de liquide peut comprendre au moins un bras avec une goulotte périphérique percée par une fente longitudinale pour assurer une répartition de liquide sensiblement constante par unité de surface.

Le répartiteur de liquide peut comprendre au moins un bras munie d'ouvertures de projection de liquide, les ouvertures étant réparties régulièrement sur ledit bras pour assurer une répartition de liquide sensiblement constante par unité de surface.

Le répartiteur de liquide peut être agencé sur une colonne rotative montée sur l'axe central longitudinal de la cuve.

La commande de pompe peut comprendre un état actif déclenché par un signal prédéterminée reçu par le détecteur de niveau bas.

La commande de pompe peut comprendre un état inactif déclenché par un signal prédéterminée reçu par le détecteur de niveau haut.

La commande de pompe peut être agencée dans un outil de régulation.

L'outil de régulation peut être en relation avec ledit détecteur de niveau bas, ledit détecteur de niveau haut et ladite pompe de prélèvement de liquide.

Le détecteur de niveau bas et le détecteur de niveau haut peuvent comprendre chacun au moins une sonde ultrasons.

Le fond de la cuve est sensiblement plat.

Le répartiteur de liquide peut comprendre un giracleur et/ou chargeur de grain.

Le détecteur de niveau bas peut être disposé sensiblement au niveau de la grille.

Le détecteur de niveau haut peut être disposé sensiblement à un niveau supérieur de la chambre de trempage.

L'invention vise également un procédé de trempage de grains. Le procédé comprend les étapes suivante :
a.Placer une céréale composée d'une pluralité de grains une grille inférieure,
b.Définir une condition active de pompe,
c.Définir une condition inactive de pompe,
d.Commander une vanne de remplissage/vidange pour remplir ou vider une cuve,
e.Détecter un signal remplissant la condition active de l'étape b.,
f.Ennoyer la céréale par au dessus avec un répartiteur de liquide,
g.Détecter un signal remplissant la condition inactive de l'étape c., et
h.Arrêter l'ennoyage de l'étape f.
Le procédé peut en outre comprendre l'étape suivante :
i.Répéter successivement les étapes d. à h. un nombre prédéterminé de fois.
Le procédé peut en outre comprendre l'étape suivante :
j.Répéter successivement les étapes d. à g. jusqu'à obtention d'une teneur d'environ 40% à 45% en humidité des grains.

D'autres avantages et caractéristiques de l'invention apparaîtront à la lecture de la description détaillée ci-après et sur les dessins et le tableau annexés sur lesquels :
- la figure 1 montre une figure schématique d'un dispositif selon un mode de réalisation de l'invention,
- la figure 2 montre une vue en perspective d'un répartiteur de liquide selon un mode de réalisation de l'invention,
- la figure 3 montre une coupe longitudinale d'un premier bras pour répartition de liquide selon un mode de réalisation de l'invention,
- la figure 4 montre une coupe longitudinale d'un deuxième bras pour répartition de liquide selon un mode de réalisation de l'invention,
- la figure 5 montre l'activation/inactivation d'une pompe au cours du temps selon un mode de réalisation de l'invention,
- la figure 6 montre un niveau d'eau dans une cuve au cours du temps selon un mode de réalisation de l'invention, et
- la figure 7 montre un organigramme d'un procédé selon un mode de réalisation de l'invention.
- Le tableau 1 montre la coopération entre un détecteur de niveau-bas et un détecteur de niveau-haut.

Les dessins et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

Il est maintenant partialement fait référence aux ouvrages *"Malterie et Brasserie"* et *"La Fabrication de la Bière"* cités plus haut pour acquérir au besoin une connaissance générale sur le maltage et sur les installations de malterie.

Comme mentionné en introduction le maltage est réalisé en malterie et fait appel à des techniques complexes afin de proprement reproduire les conditions naturelles de germination d'une céréale choisie. Ces techniques sont maintenant brièvement décrites.

La suite de la présente description est faite en référence à l'orge en tant que céréale.

Abstraction faite des tâches d'intendance comme le stockage des grains d'orge, le processus de maltage comprend au moins les opérations suivantes:
a) Un trempage des grains d'orge. Celui-ci peut se faire dans différentes sortes de cuves de trempage, appelées génériquement trempeur.
b) La germination, qui s'effectue dans des germoirs susceptibles de plusieurs modes de réalisation, notamment en raison de leur forme, qui peut être circulaire, ou au contraire semblable à un rectangle allongé. Après cette opération l'orge est qualifiée de malt vert.
c) Le touraillage, qui est presque toujours fait dans un appareil de forme circulaire, car il s'agit de faire sécher l'orge sur une grille en le faisant traverser par de l'air chaud, tout en l'agitant avec un bras radial. Après cette opération l'orge est qualifiée de malt.
d) Le dégermage, qui consiste à éliminer les radicelles de l'orge.

On donnera maintenant quelques indications générales typiques sur ces différentes opérations. Les grains de céréale sont tout d'abord soigneusement nettoyés par exemple par une opération initiale dite d'épierrage qui consiste principalement à éliminer des corps étranger tels que des pierres ou du sable.

Le but essentiel du trempage est de porter le grain à une teneur en eau proche de 50 %. L'humidité des grains passe ainsi d'environ 12 à 14 % à environ 42 à 45 %. Pour cela cette opération comprend des périodes pendant lesquelles le grain est noyé sous-eau par exemple dans une cuve. Il faut prévoir de 24 à 96 heures pour humidifier le grain jusqu'à obtention d'une teneur en eau souhaité.

Il est important que le trempage ne soit ni trop court (*soustrempage*) ni trop long (*surtrempage*). En effet, le *soustrempage* et le *surtrempage* agissent directement sur la qualité du malt et ainsi sur les produits finaux issus de ce malt. Par exemple, la qualité d'un malt influence directement le pouvoir moussant des bières fabriquées à partir de ce malt. Par conséquent, il existe une grande demande d'optimisation du temps de trempage en vue d'un malt de bonne qualité.

Classiquement, le trempage peut être continu, c'est-à-dire sans apport d'air pendant le mouillage. L'apport d'oxygène se fait par exposition du grain à l'air environnant à savoir en vidangeant et remplissant la cuve toutes les 12h par exemple. Ce processus est long.

Le trempage peut également être alterné (ou discontinu), avec des alternances de période pendant lesquelles le grain est sous l'eau avec un apport artificiel d'air pour assurer l'alimentation du grain en oxygène, et d'autres où le grain est à découvert. Ce processus est plus rapide que le trempage continu mais reste toutefois d'une durée d'environ 60 à 90h.

La température de l'eau est typiquement de 12 à 15°C, voir 20°C avec alternance d'eau froide. Le maximum de température se situe autour de 35°C, où le grain risque de mourir. Différents additifs peuvent être prévus pour empêcher la fermentation et le développement de micro-organismes pendant le trempage.

Les outils de trempage de l'état de la technique ne sont pas satisfaisant dans l'ensemble des points cités ci-dessus (pris indépendamment ou en combinaison). Il existe également un besoin d'optimiser le trempage dans des cuves à fond plat .

La germination est réalisée dans un germoir. Un germoir comprend habituellement un lit de grain placé sur une grille fine. Le germoir est traversé par un flux d'air de température, de pression et humidité contrôlées. Durant la germination le grain commence à germer et par conséquent à synthétiser des enzymes tels que l'amylase. La germination dure généralement de 4 à 6 jours environ selon la céréale utilisée.

L'opération suivante à savoir le touraillage s'effectue également sur une grille sur laquelle les grains sont placés. Lors de cette opération il s'agit de sécher le grain pour ainsi stopper la germination, tout en gardant le mieux possible les propriétés désirées du malt. Comme son nom l'indique, le touraillage s'effectue en principe sur une plate-forme circulaire mise d'une grille traversée par de l'air chaud, également sous pression et humidité contrôlées. Un bras est là aussi muni de vis sans fin plongeant dans le lit de grains, afin de tendre à l'homogénéiser verticalement. La vitesse de rotation des vis sans fin et la vitesse angulaire d'avancée du bras sont également contrôlées.

L'opération de dégermage vise la séparation des radicelles de l'orge.

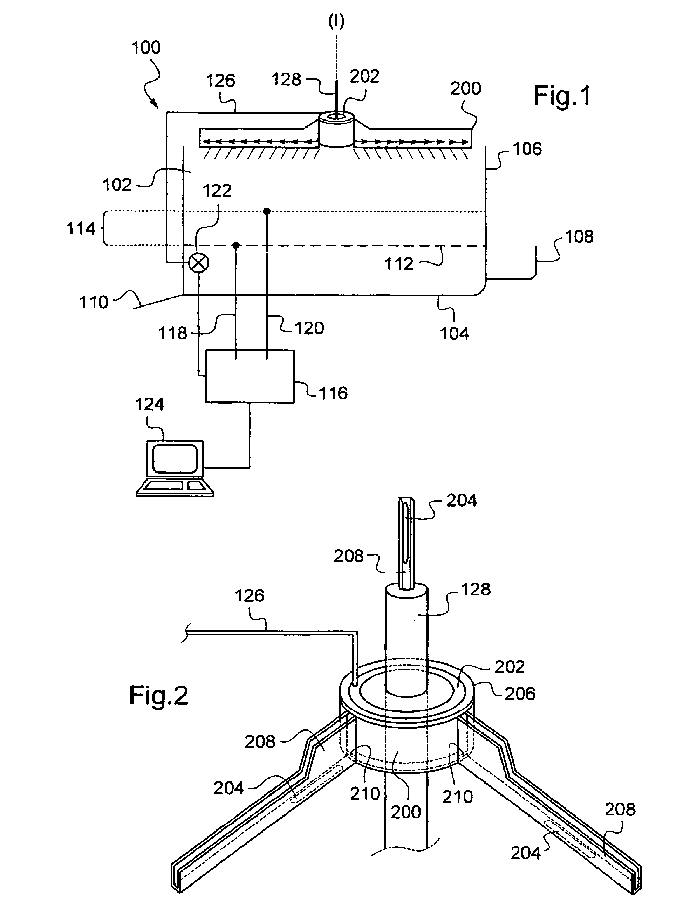

La figure 1 montre une vue schématique d'un dispositif selon un mode de réalisation de l'invention.

Le dispositif 100 comprend une cuve 102 pour contenir une suspension du type céréale/eau. La cuve 102 est formée par un fond 104 et une paroi latérale 106. La cuve 102 est une cuve à fond plat et de préférence une cuve ronde. La cuve 102 peut être remplie en liquide (eau notamment) au moyen d'une vanne de remplissage 108. Une vanne de vidange 110 permet de vidanger la cuve 102, notamment la vidange de la phase liquide de la suspension céréale/eau.

La cuve 102 comprend une grille inférieure 112 disposée au-dessus du fond 104 et à distance de celui-ci. Une céréale peut être placée sur cette grille en vue d'une opération de trempage pour porter le grain lequel compose cette céréale à une teneur en eau proche de 50 %.

La grille inférieure 112 forme un fond d'une chambre de trempage 114, laquelle se définit sur son côté supérieur par un plateau formé par les grains de céréales. L'épaisseur de la chambre de trempage 114 est donc sensiblement dépendante de la quantité de céréales déposée sur la grille 112.

Sensiblement au niveau de la grille 112, est disposé un détecteur de niveau bas 118. Le détecteur de niveau bas 118 peut être un détecteur de type optique, ultrason ou autre.

Un détecteur de niveau haut 120 est disposé sensiblement au niveau supérieur de la chambre de trempage 114. Comme il est indiqué plus haut, la partie supérieure de la chambre de trempage 114 est variable selon la quantité de grains de céréales déposée sur la grille 112. Il est donc avantageux de prévoir un détecteur de niveau haut 120 mobile qui peut être déplacé et ajusté sensiblement au niveau de la partie supérieure de la chambre de trempage 114. Le détecteur de niveau haut 120 est également de nature optique, ultrason ou autre.

Le détecteur de niveau bas 118 et le détecteur de niveau haut 120 fond partie intégrante d'un système d'homogénéisation de la durée d'humidification des grains de la céréale. À cet effet, le détecteur de niveau bas 118 et le détecteur de niveau haut 120 sont sensibles à une détection de niveau d'eau contenue dans la cuve 102.

Le système d'homogénéisation de la durée d'humidification comprend un outil de régulation 116, lequel peut notamment être commandé et contrôlé par une unité informatique 124. L'unité informatique 124 peut loger une commande de type fonction mathématique implémentée dans un programme d'ordinateur. Cette commande peut participer au pilotage de l'outil de régulation 116.

L'outil de régulation 116 est agencé pour commander une pompe 122 de prélèvement de liquide. La pompe est disposée sous la grille 112 dans la cuve 102, à savoir entre la grille 112 et le fond 104.

Le système d'homogénéisation de la durée d'humidification comprend donc une commande de pompe qui peut être activée selon des critères choisis. Selon l'invention, la pompe 122 est active entre un niveau bas de liquide détecté par le détecteur de niveau bas 118, et un niveau haut de liquide détecté par le détecteur de niveau haut 120.

La pompe 112 peut prélever à l'intérieur de la cuve 102 et en dessous de la grille 112 du liquide pour alimenter par une alimentation 126 un répartiteur de liquide 200, lequel est disposé au-dessus de la chambre de trempage 114.

Lorsque du liquide entre au moyen de la vanne de remplissage 108, le niveau de liquide augmente dans la cuve 102. Le détecteur de niveau bas 118 détecte alors le niveau de liquide lorsque celui-ci atteint sensiblement le niveau de la grille 112, à savoir la partie inférieure de la chambre de trempage 114. Le grain reposant sur la grille 112 est donc au contact de liquide à partir de ce moment là. Le détecteur de niveau bas 118 capte un signal et le transmet vers l'outil de régulation 116. L'outil de régulation 116 commande la pompe 122 pour alimenter en liquide le répartiteur de liquide 200. Le répartiteur de liquide 200 arrose au moyen de cascade d'eaux par en dessus la chambre de trempage 114.

Selon l'invention, la céréale disposée dans la chambre de trempage 114 est mis en contact avec de l'eau de manière uniforme. Plus précisément, chaque grain de la céréale est en contact avec l'eau pendant une durée sensiblement identique. Ceci est régulé par l'ensemble des éléments composant le système d'homogénéisation de la durée d'humidification.

Le dispositif 100 est agencé pour assurer une humidification des grains composant la céréale placée dans la chambre 114 sensiblement de manière homogène et uniforme.

Selon le mode de réalisation décrit ici, l'outil de régulation 116 est en communication avec un dispositif informatique 124, lequel peut comprendre des fonctions de commande diversifiées pour l'activation de la pompe 122. En effet, selon un mode de réalisation, une fonction de commande de pompes est agencée pour alimenter le répartiteur de liquide 200 avec un débit sensiblement égal au débit d'entrée de liquide dans la cuve commandée par la vanne 108. Ainsi, une fois que le niveau de liquide a augmenté sensiblement au jusqu'au niveau de la grille 112, celui-ci stagne et l'augmentation du niveau de liquide dans la cuve 102 est assuré au moyen du répartiteur de liquide 200.

Le détecteur de niveau haut 120 est ajustable en fonction de la quantité de céréales placée dans la chambre 114. Une fois que le détecteur de niveau haut 120 détecte un niveau de liquide sensiblement au niveau du plateau supérieur de la chambre de trempage 114, une fonction de commande inactive la pompe 112. Simultanément la vanne 108 est fermée. Ainsi, le niveau d'eau dans la cuve 102 est tel qu'il immerge entièrement la chambre de trempage 114. Cet état est maintenu selon un temps voulu et adapté pour l'humidification de la céréale. Ce temps est variable selon la nature de la céréale.

Lorsque la vanne de vidange 110 est activée, la cuve se vide en eau. Le détecteur de niveau haut 120 détecte que le niveau de liquide est inférieur à la partie supérieure de la chambre de trempage 114 et l'outil de régulation 116 active la pompe 122 pour arroser par en-dessus la chambre de trempage 114 jusqu'à détection d'un signal émis par le détecteur de niveau bas 118. Selon le mode de réalisation décrit, la vidange de la cuve 102 est réalisée avec un arrosage simultané par en-dessus de la chambre de trempage 114.

L'arrosage par en-dessus doit être constant et régulier sur toute la partie formant chambre de trempage 114.

À cet effet, selon un mode de réalisation, le répartiteur de liquide 124 est agencé sur une colonne rotative 128 montée sur l'axe central longitudinal I de la cuve 102. Le répartiteur de liquide 200 est agencé pour effectuer un mouvement de rotation circulaire au-dessus de la chambre de trempage 114.

Dans le mode de réalisation décrit, l'alimentation 126 du répartiteur de liquide 200 débouche dans une goulotte 202.

La figure 2 montre une vue en perspective du répartiteur de liquide 200. Le répartiteur de liquide dans le mode de réalisation décrit comprend un disque cylindrique 206 en forme de palet sur lequel sont régulièrement répartis des bras 208. Le palet 206 est centré sur la colonne rotative 128 montée sur l'axe central longitudinal I de la cuve 102. Le palet 206 comprend une goulotte 202, laquelle est alimentée en liquide par l'alimentation 126. La goulotte 202 alimente en eau les bras 208 via une ou plusieurs ouvertures 210 dans le palet 206 au niveau de la liaison entre chaque bras 208 et le palet 206. Les bras 208 comprennent des fentes d'arrosage 204 disposés longitudinalement le long des bras 208. De préférence, chaque bras 208 comprend une fente dont la longueur est sensiblement d'environ un tiers de la longueur totale d'un bras 208, chaque fente 204 étant disposée au choix dans une première partie au voisinage du palet 206, sur une seconde partie sensiblement au milieu d'un bras 208 ou disposée sur une partie terminale du bras 208 (comme le montre la figure 2).

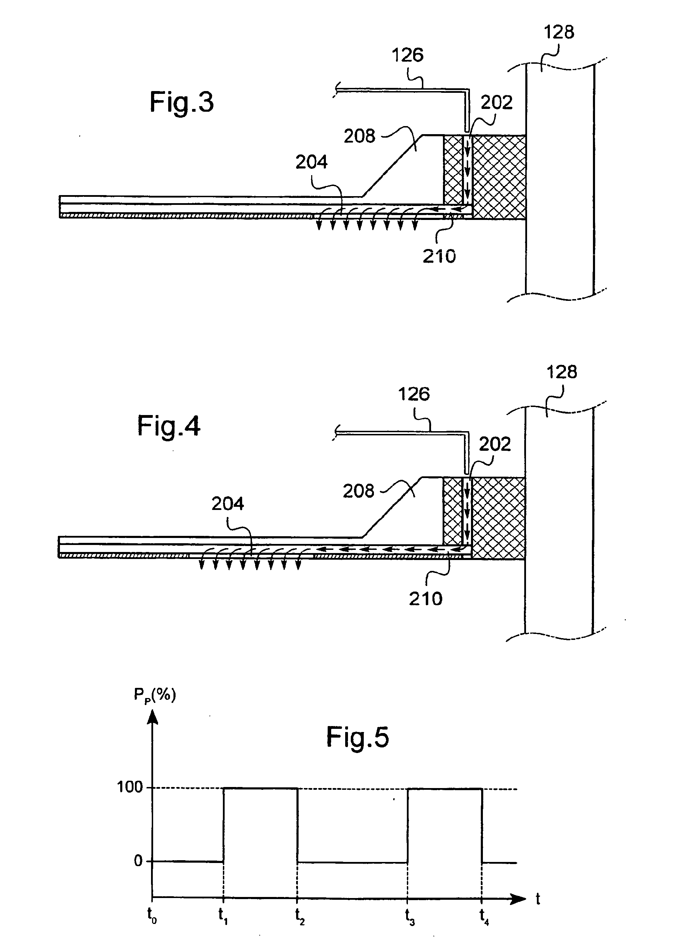

Les figures 3 et 4 montrent plus en détail les fentes d'arrosage 204, ainsi que l'interconnexion entre la partie palet 206 du répartiteur de liquide 200 et les bras 208. Les figures 3 et 4 sont des couples longitudinaux respectivement d'un premier bras et d'un deuxième bras du répartiteur de liquide 200.

L'alimentation en liquide 126 assure l'alimentation de la goulotte 202. Les flèches indiquent le cheminement que suit l'eau avant de couler à travers la fente d'arrosage 204. Comme les montrent les figures 3 et 4, les fentes 204 sont respectivement disposées de manière décalée successive sur les bras 208. Le premier bras de la figure 3 assure un arrosage de la chambre de trempage 114 sur une première partie centrale, tandis que le bras 208 de la figure 4 assure l'arrosage de la chambre de trempage 114 sur une partie intermédiaire de la chambre de trempage 114. Dans le mode de réalisation décrit, un troisième bras (voir figure 2) comprend une fente 204 sur une partie terminale des bras 208 pour assurer l'arrosage sur une partie périphérique de la chambre de trempage 114.

Les fentes sont agencées pour arroser la chambre de trempage au moyen de cascades d'eaux.

Les bras peuvent également être munis de projecteurs de liquide disposés régulièrement sur toute la longueur de bras.

Le système d'homogénéisation de l'invention permet au moyen de l'outil de régulation 116 avec la commande de pompe une humidification sensiblement constante par unité de surface de la chambre de trempage 114.

La figure 5 montre l'activation/inactivation d'une pompe 122 au cours du temps selon le mode de réalisation décrit.

A un temps T0, la pompe 122 est inactive. Ceci peut être dans la phase de remplissage de la cuve située en-dessous de la grille 112. Lorsque le détecteur de niveau bas 118 détecte un niveau de liquide sensiblement au niveau de la grille 112, à savoir sur la partie inférieure de la chambre de trempage 114, la pompe 122 est activée pour assurer un arrosage (ennoyage) par en-dessus.

L'activation de la pompe au temps T-1. Dans le mode de réalisation décrit, et comme le montre la figure 5, la pompe 122 est activée à une puissance de fonctionnement de 100%, ce qui correspond à un débit maximal d'alimentation en liquide du répartiteur de liquide 200. Dans d'autres modes de réalisation, la pompe peut être activée qu'à une puissance inférieure à 100%. Selon la puissance d'activation de la pompe 122, il est possible de réguler la montée du niveau d'eau dans la chambre de trempage 114 en coopération avec l'arrosage par en-dessus au moyen du répartiteur de liquide 200.

L'activation de la pompe, comme décrit plus haut est maintenue jusqu'à ce que le niveau de liquide dans la cuve 102 atteigne un niveau sensiblement au niveau du plateau supérieur de la chambre de trempage 114. Ce niveau est détecté par le détecteur de niveau haut 120. Lorsque le niveau supérieur de la chambre 114 est atteint, la pompe 122 passe en mode inactif, comme le montre la figure 5 au temps T2. Il suit alors une phase de trempage dans laquelle le grain est entièrement immergé d'eau. Cette période correspond à la phase entre le temps T2 et le temps T3 de la figure 5. Le temps T3 correspond à un début d'une phase de vidange de la cuve 102. La pompe 122 est alors activée pour assurer un arrosage (ennoyage) par en-dessus lors de la vidange réalisée au moyen de la vanne de vidange 110. Le niveau d'eau baisse dans la cuve 102 jusqu'à détection par le détecteur de niveau bas 118 que le niveau d'eau dans la cuve est passé en-dessous du niveau de la grille 112. La pompe 122 est alors inactivée. Ceci correspond au temps T4 de la figure 5.

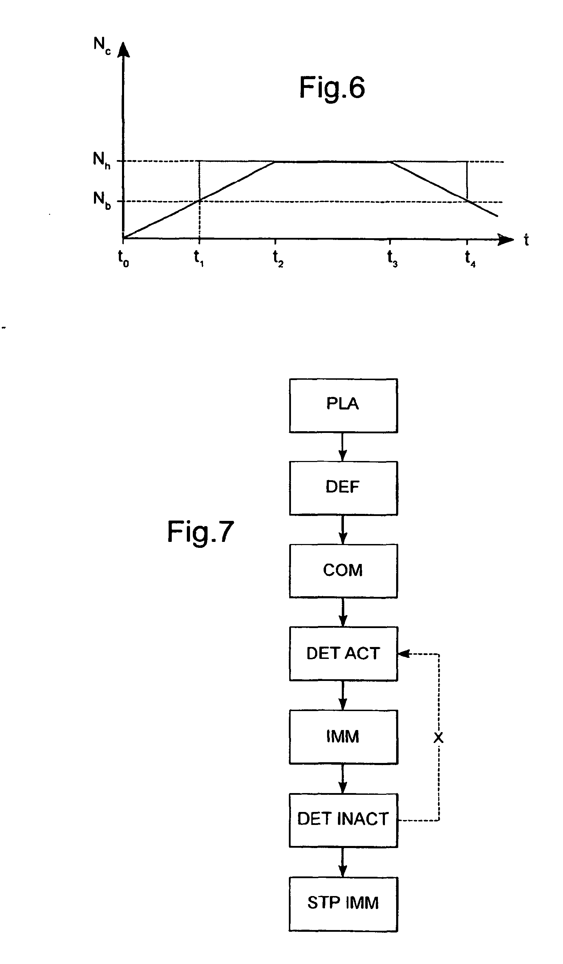

La figure 6 montre le niveau d'eau dans la cuve au cours du temps selon le mode de réalisation décrit.

Au temps T0, le niveau d'eau est quasi nul dans la cuve 102 et augmente au fur et à mesure pour atteindre un niveau situé sensiblement au niveau de la grille 112. Dans les conditions connues dans l'état de l'art, une chambre de trempage est entièrement immergée au temps T2. L'invention permet une humidification des grains régulière à partir de l'instant T1, ce qui est représenté par des pointillés sur la figure 6.

En effet, selon l'invention, la chambre de trempage est arrosée (ennoyée) par en-dessus en même temps que le niveau de liquide augmente dans la chambre de trempage 114. On évite ainsi que les grains disposés au voisinage de la grille, à savoir sur la partie inférieure de la chambre de trempage 114, soient exposés et au contact de liquide pendant un temps supérieur aux grains disposés sur le dessus de la chambre de trempage 114.

Sur la figure 6, le niveau bas Nb représente la partie inférieure de la chambre de trempage 114 (sensiblement au même niveau que la grille 112) et le niveau haut Nh correspond sensiblement au plateau supérieur de la chambre de trempage 114. Contrairement à ce qui est connu dans l'état de l'art (voir ligne continue de la figure 6), le contact entre le niveau bas Nb et le niveau Nh est homogénéisé lors du remplissage de la cuve 102. Il en est de même lors de la vidange de la cuve 102, comme les montrent les pointillés entre le temps T3 et T4 de la figure 6.

Naturellement, cette homogénéisation d'humidification est directement liée à l'activation et l'inactivation de la pompe 122 au moyen de l'outil de régulation 116.

La figure 7 montre un organigramme d'un procédé selon un mode de réalisation de l'invention.

Le procédé comprend une première opération de placement PLA, laquelle comprend le placement d'une céréale composée d'une pluralité de grains sur une grille inférieure d'une chambre de trempage 114 dans une cuve 102. Une suivante opération de définition DEF comprend la définition d'une condition active (MARCHE) de la pompe 122. Cette définition peut notamment comprendre un paramètre indiquant un niveau de liquide dans la cuve 102 sensiblement au niveau de la grille 112. (niveau détecté par le détecteur de niveau bas 118).

L'opération de définition DEF comprend également la définition d'une condition inactive (ARRET) de la pompe 122. Cette opération peut comprendre la définition d'un paramètre indiquant un niveau de liquide dans la cuve 102 sensiblement au niveau du plateau supérieur de la chambre de trempage 114 (ce niveau peut être détecté au moyen du détecteur du niveau haut 120).

L'opération de définition DEF peut comprendre une implémentation dans un programme d'ordinateur de fonctions de commande. L'implémentation peut notamment être réalisée dans un système informatique 124 en relation avec l'outil de régulation 116.

Une prochaine opération de commande COM comprend la commande au choix d'une vanne de remplissage 108 ou d'une vanne de vidange 110. L'opération COM est réalisé en vue de remplir ou de vider la cuve 102.

Une opération suivante d'activation DET ACT comprend la détection d'un signal remplissant la condition active (MARCHE) définie lors de l'opération de définition DEF. Cette détection est réalisée par la détection d'un signal capté par le détecteur niveau bas 118 ou du détecteur niveau haut 120.

Une opération suivante d'ennoyage IMM comprend un ennoyage par en-dessus de la céréale. L'opération d'ennoyage peut être réalisée par répartiteur de liquide 200.

Une opération suivante d'inactivation DET INACT comprend la détection d'un signal remplissant une condition inactive (ARRET) définie lors de l'opération de définition DEF. Après détection du signal d'inactivation, une opération suivante STP IMM consiste à arrêter l'ennoyage par en-dessus réalisé par l'opération d'ennoyage IMM.

Comme le montre la figure 7, l'opération d'activation DET ACT et d'inactivation DET INACT peuvent être répétés successivement un nombre prédéterminé de fois. Ce nombre est directement dépendant de la nature de la céréale placée dans la chambre de trempage et de sa capacité naturelle à s'imbiber d'eau pour atteindre une teneur en humidité voisine de 40 à 50%.

L'ensemble de l'installation de trempage est préférentiellement réalisé en un matériau d'alliage métallique avec des caractéristiques physico-chimiques adapté au maltage. Ces caractéristiques comprennent notamment la stabilité (résistance aux déformations et/ou corrosions) vis-à-vis de l'environnement et des changements de température, ou encore l'asepsie vis-à-vis de microorganismes. On utilise par exemple un matériau de type acier inoxydable (alliages de fer et de carbone auquel on vient ajouter du chrome et d'autres éléments comme notamment du manganèse ou du nickel, molybdène ou vanadium).

L'invention ne se limite pas aux exemples de procédé et installations (ou éléments d'installation) décrits ci-avant, seulement à titre d'exemple, mais elle englobe toutes les variantes que pourra envisager l'homme de l'art dans le cadre des revendications ci-après.

De plus l'invention a été écrite ici selon une manière parmi d'autres. Notamment, l'invention aurait pu se définir comme suit :
Dispositif 100 pour trempage d'une céréale comprenant une cuve 102 formée par un fond 104 de cuve et une paroi latérale 106, une vanne de remplissage 108 de la cuve en liquide, une vanne de vidange 110 de la cuve en liquide, et une grille 112 disposée au dessus et à distance du fond 104 de cuve, ladite grille 112 formant un support pour céréale d'une chambre de trempage 114 de céréale, **caractérisé en ce que** le dispositif comprend un outil d'homogénéisation d'humidification 116 de céréale avec un détecteur de niveau bas 118 de liquide dans la cuve, un détecteur de niveau haut 120 de liquide dans la cuve, une pompe 122 de prélèvement de liquide sous la grille dans la cuve, et un répartiteur 200 de liquide alimenté par ladite pompe 122 et disposé au dessus de la chambre de trempage 114.

L'outil d'homogénéisation d'humidification 116 commande la pompe 122 selon une fonction prédéterminée en relation avec un signal seuil-bas reçu par le détecteur de niveau bas 118 et avec un signal seuil-haut reçu par le détecteur de niveau haut 120.

Le détecteur de niveau bas 118 peut être disposé sensiblement au niveau de ladite grille 112.

La fonction prédéterminée peut notamment comprendre une commande « en marche » laquelle fait basculer la pompe 122 en état de fonctionnement lorsque le détecteur de niveau bas 118 a détecté un niveau de liquide inférieur sensiblement au niveau de la grille 112, et une commande « arrêt » laquelle fait basculer la pompe 122 en état de veille lorsque le détecteur de niveau haut 120 a détecté un niveau de liquide supérieur sensiblement au niveau supérieur de la chambre de trempage 114.

La fonction prédéterminée peut notamment comprendre une commande « en marche » laquelle fait basculer la pompe 122 en état de fonctionnement lorsque le détecteur de niveau bas 118 a détecté un niveau de liquide à un niveau supérieur au niveau de la grille (112), et une commande « arrêt » laquelle fait basculer la pompe 122 en état de veille lorsque le détecteur de niveau bas 120 a détecté un niveau de liquide inférieur au niveau de la grille (112).

Généralement, la fonction prédéterminée comprend une commande « en marche » et une commande « arrêt » définies par la coopération entre le détecteur de niveau bas et le détecteur de niveau haut. Le tableau 1 montre la coopération entre un détecteur de niveau-bas et un détecteur de niveau-haut en relation avec les conditions pour les commandes « en marche » et « arrêt ».

**Tableau 1 :**

| **CONDITION** | **Signal détecteur bas** | **Signal détecteur haut** |
|---|---|---|
| « en marche » | *1* | *0* |
| « arrêt » | *0* | *0* |
| « arrêt » | *1* | *1* |

| | | |
|---|---|---|
| *0* représente une détection négative par un détecteur ; *1* représente la détection positive par un détecteur. | | |

## Revendications

1. Dispositif (100) pour trempage de grains comprenant une cuve (102) formée par un fond (104) de cuve et une paroi latérale (106), une vanne de remplissage (108) de la cuve en liquide, une vanne de vidange (110) de la cuve en liquide, et une grille inférieure (112) à distance du fond (104), la grille inférieure (112) formant le fond d'une chambre de trempage (114) de grains, **caractérisé en ce que** le dispositif comprend un système d'homogénéisation de la durée d'humidification des grains pourvu d'un détecteur de niveau bas (118) de liquide dans la cuve, d'un détecteur de niveau haut (120) de liquide dans la cuve, d'une pompe (122) de prélèvement de liquide sous la grille dans la cuve, d'une commande de pompe active entre le niveau bas et le niveau haut de liquide, et d'un répartiteur de liquide (200) alimenté par la pompe (122) et disposé au dessus de la chambre de trempage (114) de grains.

2. Dispositif selon la revendication 1, dans lequel le répartiteur de liquide (200) comprend au moins un bras (208) avec une goulotte périphérique percée par une fente (202) longitudinale pour assurer une répartition de liquide sensiblement constante par unité de surface.

3. Dispositif selon la revendication 1, dans lequel le répartiteur de liquide (200) comprend au moins un bras (208) munie d'ouvertures de projection de liquide (204), les ouvertures étant réparties régulièrement sur ledit bras pour assurer une répartition de liquide sensiblement constante par unité de surface.

4. Dispositif selon l'une des revendications précédentes, dans lequel le répartiteur de liquide (200) est agencé sur une colonne rotative (128) montée sur l'axe central longitudinal (I) de la cuve (102).

5. Dispositif selon l'une des revendications précédentes, dans lequel la commande de pompe comprend un état actif déclenché par un signal prédéterminée reçu par le détecteur de niveau bas (118).

6. Dispositif selon l'une des revendications précédentes, dans lequel la commande de pompe comprend un état inactif déclenché par un signal prédéterminée reçu par le détecteur de niveau haut (120).

7. Dispositif selon l'une des revendications précédentes, dans lequel la commande de pompe est implémentée dans un outil de régulation (116).

8. Dispositif selon l'une des revendications précédentes, dans lequel l'outil de régulation est en relation avec ledit détecteur de niveau bas (118), ledit détecteur de niveau haut (120) et ladite pompe (122) de prélèvement de liquide.

9. Dispositif selon l'une des revendications précédentes, dans lequel le détecteur de niveau bas (118) et le détecteur de niveau haut (120) comprennent chacun au moins une sonde ultrasons.

10. Dispositif selon l'une des revendications précédentes, dans lequel le répartiteur (200) de liquide comprend un giracleur et/ou chargeur de grain.

11. Dispositif selon l'une des revendications précédentes, dans lequel le détecteur de niveau bas (118) est disposé sensiblement au niveau de la grille (112).

12. Dispositif selon l'une des revendications précédentes, dans lequel le détecteur de niveau haut (120) est disposé sensiblement à un niveau supérieur de la chambre de trempage (114).

13. Procédé de trempage de grains dans un dispositif selon la revendication 1, le procédé comprenant les étapes suivantes :
a. Placer une céréale composée d'une pluralité de grains sur la grille inférieure (112),
b. Définir une condition active (MARCHE) de la pompe (122),
c. Définir une condition inactive (ARRÊT) de la pompe (122),
d. Commander une vanne de remplissage/vidange pour remplir ou vider la cuve (102)
e. Détecter un signal remplissant la condition active de l'étape b.,
f. Ennoyer la céréale par au dessus avec le répartiteur de liquide (200),
g. Détecter un signal remplissant la condition inactive de l'étape c., et
h. Arrêter l'ennoyage de l'étape f.

14. Procédé de trempage selon la revendication 13, comprenant en outre l'étape suivante :
i. Répéter successivement les étapes d. à h. un nombre prédéterminé de fois.

15. Procédé de trempage selon l'une des revendications 13 ou 14, comprenant en outre l'étape suivante :
j. Répéter successivement les étapes d. à g. jusqu'à obtention d'une teneur d'environ 40% à 45% en humidité des grains.

## Patentansprüche

1. Vorrichtung (100) zum Weichen von Getreide mit einem Bottich (102) enthaltend einen Bottichboden (104) und eine Seitenwand (106), ein Bottichfüllventil (108) zum Füllen des Bottichs mit Flüssigkeit, ein Bottichablaufventil (110) zum Entleeren des Bottichs von Flüssigkeit und einen vom Boden (104) beabstandeten unteren Rost (112), wobei der untere Rost (112) den Boden einer Getreideweichkammer (114) bildet, **dadurch gekennzeichnet, dass** die Vorrichtung ein System zur Vergleichmäßigung der Befeuchtungsdauer des Getreides mit einem Detektor (118) für den unteren und einem Detektor (120) für den oberen Flüssigkeits-Füllstand (Unter- bzw. Oberniveau) im Bottich, eine Flüssigkeits-Entnahmepumpe (122) unter dem Rost im Bottich, eine zwischen dem unteren und dem oberen Füllstand wirkende Pumpensteuerung und einen Flüssigkeits-Verteiler (200) aufweist, der von der Pumpe (122) gespeist wird und sich über der Getreide-Weichkammer (114) befindet.

2. Vorrichtung nach Anspruch 1, deren Flüssigkeits-Verteiler (200) mindestens einen Arm (208) mit einer umlaufenden Rinne aufweist, die einen Längsschlitz (202) enthält, um ein im Wesentliches konstantes Verteilen der Flüssigkeit pro Flächeneinheit zu gewährleisten.

3. Vorrichtung nach Anspruch 1, deren Flüssigkeits-Verteiler (200) mindestens einen Arm (208) mit Öffnungen (204) zum Ausstoßen von Flüssigkeit aufweist, wobei die Öffnungen gleichmäßig über den Arm verteilt sind, um ein im Wesentliches konstantes Verteilen der Flüssigkeit pro Flächeneinheit zu gewährleisten.

4. Vorrichtung nach einem der vorgehenden Ansprüche, deren Flüssigkeits-Verteiler (200) auf eine drehbare Säule (128) aufgesetzt ist, die auf der Längsmittelachse (I) des Bottichs (102) gelagert ist.

5. Vorrichtung nach einem der vorgehenden Ansprüche, deren Pumpensteuerung einen aktiven Zustand aufweist, der von einem vorbestimmten Signal für das Unterniveau aus dem Detektor (118) ausgelöst wird.

6. Vorrichtung nach einem der vorgehenden Ansprüche, deren Pumpensteuerung einen inaktiven Zustand aufweist, der von einem vorbestimmten Signal für das Oberniveau aus dem Detektor (120) ausgelöst wird.

7. Vorrichtung nach einem der vorgehenden Ansprüche, deren Pumpensteuerung in einer Pumpenregeleinrichtung (116) implementiert ist.

8. Vorrichtung nach einem der vorgehenden Ansprüche, deren Regeleinrichtung mit dem Unterniveau-Detektor (118), dem Oberniveau-Detektor (120) und der Flüssigkeit-Entnahmepumpe (122) verbunden ist.

9. Vorrichtung nach einem der vorgehenden Ansprüche, deren Unter- und Oberniveau-Detektor (118, 120) jeweils mindestens eine Ultraschallsonde aufweisen.

10. Vorrichtung nach einem der vorgehenden Ansprüche, deren Flüssigkeits-Verteiler (200) eine Getreide-Ausgleichs- und/oder Beschickungsvorrichtung aufweist.

11. Vorrichtung nach einem der vorgehenden Ansprüche, deren Unterniveau-Detektor (118) im Wesentlichen auf der Höhe des Rosts (112) liegt.

12. Vorrichtung nach einem der vorgehenden Ansprüche, deren Oberniveau-Detektor (120) auf einer Höhe im Wesentlichen über der Weichkammer (114) liegt.

13. Verfahren zum Weichen von Getreide in einer Vorrichtung nach Anspruch 1, das folgende Schritte aufweist:
a. Auftragen von Getreide aus zahlreichen Körnern auf den unteren Rost (112);
b. Festlegen eines aktiven Zustands (BETRIEB) der Pumpe (122);
c. Festlegen eines inaktiven Zustands (HALT) de Pumpe (122);
d. Ansteuern eines Füll-/Ablass-Ventils zum Füllen oder Entleeren des Bottichs (102);
e. Erfassen eines Signals, das den aktiven Zustand im Schritt b. erfüllt;
f. Überschwemmen des Getreides von oben mit dem Flüssigkeits-Verteiler (200);
g. Erfassen eines Signals, das den inaktiven Zustand des Schritts c. erfüllt; und
h. Abschalten des Überschwemmens des Schritts f.

14. Weichverfahren nach Anspruch 13 mit weiterhin folgendem Schritt:
i. Vorbestimmt häufiges Wiederholen der Schrittfolge d. bis h.

15. Weichverfahren nach Anspruch 13 oder 14 mit weiterhin folgendem Schritt:
j. Wiederholen der Schritte d. bis g. bis zum Erreichen eines Feuchtegehaltes von etwa 40 % bis 45% im Getreide.

## Claims

1. Device (100) for dipping grains comprising a tank (102), formed by a base (104) of the tank and a side wall (106), a filler valve (108) for the liquid in the tank, a drain valve (110) for the liquid in the tank and a lower grid (112) at a distance from the base (104), the lower grid (112) forming the base of a dipping chamber (114) for the grains, **characterised in that** said device comprises a system of homogenisation for the duration of the wetting of the grains consisting of a detector for a low liquid level in the tank (118), a detector for a high liquid level in the tank (120), a pump (122) for removing the liquid below the grid in the tank, a pump control active between the high level and the low level of liquid, and a liquid distributor (200) supplied by the pump (122) and arranged above the dipping chamber (114) for the grains.

2. Device according to claim 1, in which the liquid distributor (200) comprises at least one arm (208) with a peripheral channel pierced by a longitudinal slit (202) so as to ensure a substantially constant distribution of the liquid per unit area.

3. Device according to claim 1, in which the liquid distributor (200) comprises at least one arm (208) having openings (204) through which the liquid can be sprayed, said openings being distributed at regular intervals along the said arm so as to ensure a substantially constant distribution of the liquid per unit area.

4. Device according to any of the preceding claims, in which the liquid distributor (200) is arranged on a rotatable column (128) mounted on the central longitudinal axis (I) of the tank (102).

5. Device according to any of the preceding claims, in which the pump control comprises an active state triggered by a predetermined signal received from the low level detector (118).

6. Device according to any of the preceding claims, in which the pump control comprises an active state triggered by a predetermined signal received from the high level detector (120).

7. Device according to any of the preceding claims, in which the pump control is implemented in a control tool (116).

8. Device according to any of the preceding claims, in which the control tool is in relation to the said low level detector (118), the said high level detector (120) and the said liquid sampling pump (122).

9. Device according to any of the preceding claims, in which the low level detector (118) and the high level detector (120) each comprise at least one ultrasonic probe.

10. Device according to any of the preceding claims, in which the liquid distributor (200) comprises a grain spreader and/or feeder.

11. Device according to any of the preceding claims, in which the low level detector (118) is arranged substantially at the level of the grid (112).

12. Device according to any of the preceding claims, in which the high level detector (120) is arranged substantially at a level above that of the dipping chamber (114).

13. Method for dipping the grains in a device according to claim 1, wherein the process comprises the following steps:
a. Placing a cereal in the form of a plurality of grains on the lower grid (112),
b. Defining an active condition (ON) for the pump (122),
c. Defining an inactive condition (OFF) for the pump (122),
d. Controlling a filler/drain valve in order to fill or to empty the tank (102),
e. Detecting a signal indicating that the active condition in step b. is satisfied,
f. Flooding the cereal from above with the liquid distributor (200),
g. Detecting a signal indicating that the inactive condition in step c. is satisfied, and
h. Stopping the flooding process in step f.

14. Method for dipping according to claim 13, comprising the following additional step:
i. Repeating successively the steps d. to h. a predetermined number of times

15. Method for dipping according to either of claims 13 or 14, comprising the following additional step:
j. Repeating successively the steps d. to g. until a moisture content of approximately 40% to 45% of the grains is obtained.
